(19)

Europäisches
Patentamt
European
Patent Office
Office européen
des brevets

(11) **EP 2 333 736 A2**

(12) **EUROPEAN PATENT APPLICATION**

(43) Date of publication:
**15.06.2011 Bulletin 2011/24**

(51) Int Cl.:
**G08B 13/196** *(2006.01)* **G06K 9/00** *(2006.01)*
**G06N 5/04** *(2006.01)*

(21) Application number: **10167200.4**

(22) Date of filing: **24.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **04.12.2009 EP 09015088**

(71) Applicant: **SIEMENS AKTIENGESELLSCHAFT
80333 München (DE)**

(72) Inventors:
• **Han, Seung Han
80804, München (DE)**
• **Koo, Bon Jung
81477, München (DE)**
• **Hutter, Andreas
81673, München (DE)**

(54) **A method for computer-assisted extraction of information from a digital video**

(57) The invention refers to a method for computer-assisted extraction of information from a digital video comprising one or more image frames (F1, F2, F3). In the method of the invention, a number of objects (H1, H2, H3) and one or more parameters (x, θ) with respect to said number of objects (H1, H2, H3) in the video are detected. Thereafter, one or more opinions (O1 02, ..., 06, OP) based on subjective logic are determined, each opinion (O1 02, ..., 06, OP) referring to a proposition concerning information in the video and being derived from said one or more parameters with respect to said number of objects (H1, H2, H3) in the video.

## FIG 3

$$\mu(x) = a + \frac{(1-a)(x-\text{max\_dist})^2}{\text{max\_dist}^2}$$

EP 2 333 736 A2

**Description**

A method for computer-assisted extraction of information from a digital video

The invention refers to a method for computer-assisted extraction of information from a digital video as well as to a video analyzing system and a computer program product.

In the domain of video surveillance, there is an interest to automatically derive meaningful information from the recorded videos. For example, recorded video streams may be used in order to detect unallowed actions in the video and to find witnesses observing the unallowed actions in the video. Another application refers to the monitoring of technical devices by a video in order to detect a failure of the devices based on the information recorded in the video stream.

According to the prior art, computer-assisted methods are known enabling the detection of objects, e.g. of human persons, in a video and to derive parameters with respect to the detected persons, e.g. the distance between the persons and/or the moving direction of the persons. However, those methods do not derive further information from the video such as the above mentioned information concerning witnesses or technical devices.

Therefore, it is an object of the invention to enable an information extraction from a video deriving more information from the video than prior art methods.

This object is solved by the independent patent claims. Preferred embodiments are defined in the dependent subclaims.

According to the method of the invention, information from a digital video comprising one or more image frames is derived in two successive steps. In a first step i), a number of objects and one or more parameters with respect to said objects are detected in the video. In a second step ii), one or more opinions based on subjective logic are determined, each opinion referring to a proposition concerning information in the video and being derived from said one or more parameters with respect to said number of objects in the video. The term "video" in the context of the invention has a broad meaning and may also refer to a single image or image frame.

The invention is based on the idea to use the framework of subjective logic in order to derive information from a video. Subjective logic per se is well known in the prior art. This type of logic is a probabilistic logic that explicitly takes uncertainty and belief in corresponding propositions into account. The arguments in subjective logic are subjective opinions about propositions and in this description as well as in the claims the term "opinion" is to be understood as a "subjective opinion" according to subjective logic. The opinions derived according to the invention are also named binomial opinions and can be represented by so-called opinion triangles indicating a belief and a disbelief in a proposition as well as an uncertainty with respect to the belief and disbelief.

Furthermore, the opinion includes a so-called atomicity and a probability expectation value which is related to the atomicity. In addition, a probability density function can be derived from the subjective opinion. In this respect, it is well known that a subjective opinion can be expressed by a corresponding beta distribution describing the probability density function of the opinion. In subjective logic, a plurality of operators is defined to which embodiments of the invention will refer. As those operators are well known, the operations performed by those operators will not be described in detail. There are a lot of prior art documents describing subjective logic. Reference is made to documents [1] and [2]. The whole disclosure of documents [1] and [2] is incorporated by reference in this application.

In a preferred embodiment of the invention, the one or more opinions determined in step ii) are output as corresponding probability density functions. Those probability density functions give an intuitive understanding for a user about the belief in the proposition modelled by the opinion and the uncertainty related to the opinion. As mentioned before, the representation of a subjective opinion by a probability density function is well known in the prior art and, thus, will not be explained here in detail.

In another embodiment of the invention, the one or more opinions determined in step ii) refer to a relation proposition that two objects, particularly two persons, in the video have a relation, particularly that two persons in the video can see each other. This embodiment of the invention is particularly useful for reasoning about and/or forensic retrieval of information in a video, e.g. to detect whether one person can be a witness of an action performed by another person and vice versa.

In a preferred embodiment of the invention, the relation proposition is based on the following parameters with respect to two objects detected in the video:

- the distance between the two objects in the video; and/or
- the direction of movement of the two objects with respect to each other in the video.

Those parameters are good measures whether two objects are related to each other. Particularly, the probability that two persons can see each other increases with decreasing distance between the persons. Analogously, the probability that two persons can see each other increases the more the persons move towards each other.

In a particularly preferred embodiment of the invention, the step ii) performed by the method of the invention comprises the following sub-steps:

- a sub-step of determining a first relation degree between the two objects, where the first relation degree represents a strength of the relation between the two objects based on the distance between the two objects, and/or determining a second relation degree between the two objects, where the second relation degree represents the strength of the relation between the two objects based on the direction of movement of the two objects with respect to each other;

- the sub-step of determining a first relation opinion for the first relation degree, where the first relation opinion is preferably a first dogmatic opinion, where the uncertainty of the first dogmatic opinion is zero, and where the belief of the first relation opinion represents the first relation degree, and/or determining a second relation opinion for the second relation degree, where the second relation opinion is preferably a second dogmatic opinion, where the uncertainty of the second dogmatic opinion is zero, and where the belief of the second relation opinion represents the second relation degree;

- the sub-step of determining a first reputation opinion for the first relation degree, where the first reputation opinion models a belief in the correctness of the first relation degree, and/or determining a second reputation opinion for the second relation degree, where the second reputation opinion models a belief in the correctness of the second relation degree;

- the sub-step of combining the first relation opinion and the first reputation opinion by the subjective logic operator "Discounting", thus forming a first opinion, and/or combining the second relation opinion and the second reputation opinion by the subjective logic operator "Discounting", thus forming a second opinion.

In this embodiment, the first and/or second relation degrees are preferably scaled on a value between zero and one and, thus, directly correspond to the belief of the corresponding first or second relation opinion.

According to the aforementioned embodiment, the well known subjective logic operator "Discounting" is efficiently used in order to model an opinion on the relation between two objects based on the distance and/or direction of movement of the objects with respect to each other. The aforementioned term "dogmatic opinion" refers to an opinion with no uncertainty and, thus, can be represented as a normal probability value.

In a variant of the invention, the above-defined first or second relation opinions are opinions with some uncertainty, e.g. from measurement noise.

In a preferred variant of the previously described embodiment, the first relation degree decreases with increasing distance between the two objects and/or the second relation degree increases the more the two objects move towards each other according to the direction of movement of the two objects with respect to each other. Hence, the first relation degree and second relation degree appropriately represent intuitive prior knowledge with respect to the relation of two objects depending on the distance and the direction of movement of those objects.

In another preferred embodiment of the invention, the first relation degree is adequately modelled by a monotonically decreasing function dependent on the distance between the two objects and/or the second relation degree is modelled adequately by a monotonically increasing function depending on the direction of movement of the two objects with respect to each other. In this respect, the direction of movement is preferably described by an intersection angle between the objects moving towards each other. I.e., an intersection angle of zero represents a situation, where there is not intersection between the directions of movement of the objects, meaning that the objects move away from each other, whereas intersection angles greater than zero indicate that the objects approach to each other. In this respect, an angle of 180° indicates that the persons directly move towards each other.

The aforementioned first relation degree can be modelled by different monotonically decreasing functions. Preferably, one of the following functions $\mu\mathbf{1(x)}$, $\mu\mathbf{2(x)}$ or $\mu\mathbf{3(x)}$ is used for modelling the first relation degree:

$$\mu 1\left(x\right)=a+\frac{\left(1-a\right)\left(\max\_\mathrm{dist}^2-x^2\right)}{\max\_\mathrm{dist}^2}$$

$$\mu 2\left(x\right)=a+\frac{\left(1-a\right)\left(x-\max\_\mathrm{dist}\right)^2}{\max\_\mathrm{dist}^2}$$

$$\mu 3\left(x\right)=a+\frac{\left(1-a\right)\left(x-\max\_\mathrm{dist}\right)}{\max\_\mathrm{dist}}$$

where max_dist is an estimated maximum distance for which two objects can have a relation with each other; where a is the probability of a relation at the maximum distance max_dist; where x is the distance between the two objects.

Analogously, the second relation degree can be modelled by different monotonically increasing functions. Particularly, the second relation degree is modelled by one of the following functions $\mu\mathbf{1(\theta)}$, $\mu\mathbf{2(\theta)}$ or $\mu\mathbf{3(\theta)}$:

$$\mu 1\left(\theta\right)=1+\frac{\left(a-1\right)\left(180^2-\theta^2\right)}{180^2}$$

$$\mu2(\theta) = a + \frac{(1-a)\theta}{180}$$

$$\mu3(\theta) = a + \frac{(1-a)\theta^2}{180^2}$$

where θ is the intersection angle between the moving directions of the two objects;

where a is the probability of a relation between the two objects at an intersection angle θ = 0.

In another preferred embodiment of the invention, the first and/or second reputation opinion are also generated by corresponding functions. Particularly, the first reputation opinion and/or the second reputation opinion are each generated by a belief function, a disbelief function and an uncertainty function, the belief function describing the belief of the corresponding first or second reputation opinion dependent on the corresponding first or second relation degree and the uncertainty function describing the uncertainty of the corresponding first or second reputation opinion dependent on the corresponding first or second relation degree and the disbelief function being one minus the belief function and minus the uncertainty function. In a preferred embodiment, the same functions are used for both the first reputation opinion and the second reputation opinion. Nevertheless, it is also possible to use different functions for the first and the second reputation opinion.

In another embodiment of the invention, the belief function has a value of one for a value of zero of the corresponding first or second relation degree and the belief function has values smaller than one but greater than zero for values of the corresponding first or second relation degree between zero and a maximum value of the corresponding first or second relation degree and the belief function has a value of one for the maximum value of the corresponding first or second relation degree.

In another embodiment of the invention, the uncertainty function has the value of zero for a value of zero of the corresponding first or second relation degree and the uncertainty function has values greater than zero but smaller than one for values of the corresponding first or second relation degree between zero and a maximum value of the first or second relation degree and the uncertainty function has a value of zero for the maximum value of the corresponding first or second relation degree.

In a particularly preferred embodiment, the belief function b, the disbelief function d and the uncertainty function u are defined as follows:

$$b = k + 4(1-k)\left(\mu - \frac{1}{2}\right)^2$$

$$d = \frac{1-b}{\text{Dratio}}$$

$$u = 1 - b - d$$

where k is the minimum value of the belief;

where μ is the relation degree;

where Dratio is a predetermined constant, particularly Dratio = 2.

The aforementioned embodiments for deriving the first opinion based on a distance and a second opinion based on a direction of movement can be combined in order to process a video sequence with a number of frames. To do so, steps i) and ii) of the method of the invention are performed for each frame of at least a part of the frames form the video, where for each frame the following steps are performed:

- The first opinion is combined by the subjective logic operator "Discounting" with an opinion on the detection of the two objects, resulting in a third opinion.
- The second opinion is combined by the subjective logic operator "Discounting" with an opinion on the detection of the two objects resulting in a fourth opinion.
- The third opinion and the fourth opinion are combined by the subjective logic operator "Conjunction" to a fifth opinion.

Hence, for each frame in the video a fifth opinion can be determined which considers both the distance and the direction of movement of two objects in order to represent information with respect to the relation between the two objects.

In another preferred embodiment, the aforementioned opinion on the detection of the two objects is calculated by combining an opinion on the detection of each object by the subjective logic operator "Conjunction".

In order to derive an overall opinion with respect to the frames of at least a part of the frames of the video, the above described fifth opinions of each frame are combined by the subjective logic operators "Consensus" to a sixth opinion.

In another embodiment of the invention, step ii) performed by the method, comprises the following sub-steps:

- One or more intermediate opinions on a proposition concerning one or more detected observations are determined, said detected observations being derived from the number of objects and the one or more parameters with respect to the objects detected in step i).

- A first predetermined opinion on a proposition concerning a first predetermined observation in case that a condition applies and a second predetermined opinion on a proposition concerning a second predetermined observation in case that said condition does not apply as well as a predetermined prior knowledge value are combined by the subjective logic operator "Abduction" with said one or more intermediate opinions, thus resulting in an opinion on a proposition concerning the presence of said condition based on said one or more detected observations.

According to this embodiment of the invention, the well known "Abduction" operator is efficiently used to derive new knowledge from a detected observation based on prior knowledge modelled as first and second predetermined opinions and a predetermined prior knowledge value.

The aforementioned embodiment introduces logic rules based on a fact in the form of condition and a consequence resulting from this fact in the form of predetermined observations. By using the abduction operator, new knowledge with respect to the presence of the condition for a detected observation can be derived easily.

In a preferred variant of the above explained embodiment, the intermediate opinion as well as the first and second predetermined opinions are dogmatic opinions (i.e. opinions with zero uncertainty), whereas the prior knowledge value is a probability value representing an estimated probability that the above mentioned condition applies.

In another preferred embodiment of the invention, the parameters with respect to the number of the objects refer to the respective positions of the number of objects in the video, where each object of the number of objects preferably represents a person. Furthermore, the one or more intermediate opinions preferably comprise one or more opinions on propositions that objects detected in the video are located in one or more predetermined areas. Those predetermined areas preferably comprise an area of a transportation means, particularly an escalator. In this respect, the first predetermined opinion preferably refers to the proposition that objects are on the transportation means in case that the transportation means is working and the second predetermined opinion preferably refers to the proposition that objects are not on the transportation means or are on another transportation means in case that the transportation means is not working and the prior knowledge value preferably refers to a probability that the transportation means is working. This results in an opinion on the proposition that the transportation means is working for the detected observation.

Besides the above described method, the invention also refers to a video analyzing system for a computer-assisted extraction of information from a digital video comprising one or more image frames, said video analyzing system including first means for detecting a number of objects and one or more parameters with respect to the number of objects in the video and second means for determining one or more opinions based on subjective logic, each opinion referring to a proposition concerning information in the video and being derived from the one or more parameters of the number of objects in the video. The video analyzing system is preferably arranged to perform any of the above described preferred embodiments of the invention.

Furthermore, the invention refers to a computer program product directly loadable into the internal memory of a digital computer, comprising software code portions for performing the above described method of the invention when said product is run on a computer.

Embodiments of the invention will now be described with respect to the accompanying drawings, wherein

Fig. 1    shows a schematic illustration explaining a subjective opinion used in the framework of subjective logic according to the invention;

Fig. 2    shows a video frame from which information is extracted according to embodiments of the invention;

Fig. 3    illustrates an information extraction from a video according to a first embodiment of the invention;

Fig. 4    illustrates an information extraction from a video according to a second embodiment of the invention;

Fig. 5    shows the function used for a reputation opinion according to the first and second embodiment of the invention;

Fig. 6    shows a sequence of video frames from which information is extracted based on a third embodiment of the invention;

Fig. 7    shows the derivation of a subjective opinion according to the third embodiment of the invention;

Fig. 8    shows a video frame from which information is extracted according to a fourth embodiment of the invention;

Fig. 9    shows the extraction of an opinion concerning an observation from a video frame as shown in Fig. 8;

Fig. 10   illustrates an information extraction based on the fourth embodiment of the invention; and

Fig. 11   shows a video analyzing system according to an embodiment of the invention.

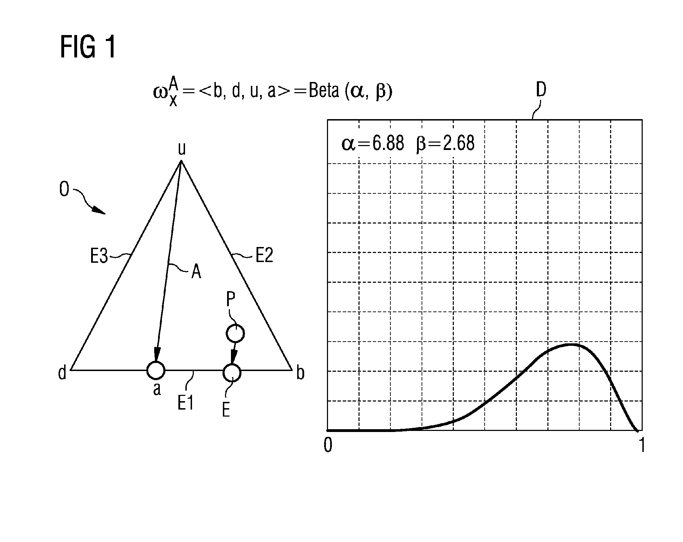

All embodiments described in the following use the framework of the so-called subjective logic in order to derive information from a video scene. Subjective logic per se is known from the prior art and there are several publications about this kind of logic (see e.g. documents [1] and [2]). In subjective logic, a statement or proposition is not considered to be true or false but is described by uncertain probabilities modelled by so-called subjective opinions which also will be called just opinions in the following. In Fig. 1, a subjective opinion is represented by $\omega_x^A$ and reflects the opinion of an agent A with respect to a corresponding proposition x. This opinion is represented by a quadruple with variables b, d, u and a. b refers to the belief in the correctness of the proposition, d refers to the disbelief in the correctness of the proposition, u refers to the uncertainty with respect to the values of b and d and a refers to the so-called atomicity. The sum of b, d and u always equals one.

Fig. 1 illustrates the opinion $\omega_x^A$ as a triangle O which is a common representation of a subjective opinion. The left vertex of the triangle refers to the disbelief d, the right vertex to the belief b and the upper vertex to the uncertainty u. The opinion is represented by the point P inside the triangle as well as by the arrow A pointing to the atomicity a. The edges of the triangle have the same length and the perpendicular from each vertex to the opposing edge has the length 1. The point P is derived by drawing a line parallel to the edge E2 with a distance from the edge E2 having the value of d according to the quadruple $\omega_x^A$ and by drawing a line parallel to the edge E3 with a distance to the edge E3 having the value of b according to the quadruple $\omega_x^A$. The intersection of both lines represents the location for the point P. This point automatically gives the value of u which is the distance between the point P and the edge E1. The value of the atomicity a according to the quadruple $\omega_x^A$ is represented as the value along the edge E1, said edge being sealed to probability values between zero (vertex d) and one (vertex b). By performing a parallel shift of the arrow A such that the arrow intersects the point P, one gets the probability expectation value E of the opinion.

It is well known that the opinion described by the quadruple $\omega_x^A$ the triangle O can also be represented as a probability distribution function being a beta function Beta $(\alpha, \beta)$ with parameters $\alpha$ and $\beta$. Such a probability density function wherein the value $\alpha = 6.88$ and $\beta = 2.68$ is shown in the diagram D in the right part of Fig. 1. The probability density function gives an intuitive representation on the correctness and uncertainty of the proposition modelled by the opinion. The more the peak of the probability density function is to the right, the higher is the belief in the correctness of the proposition. The narrower the peak of the probability function, the higher is the certainty of the value of the belief. In the following embodiments, subjective opinions are derived as information from video scenes. Those opinions can be represented by the quadruple $\omega_x^A$ and/or by the triangle O and/or by a corresponding probability density function.

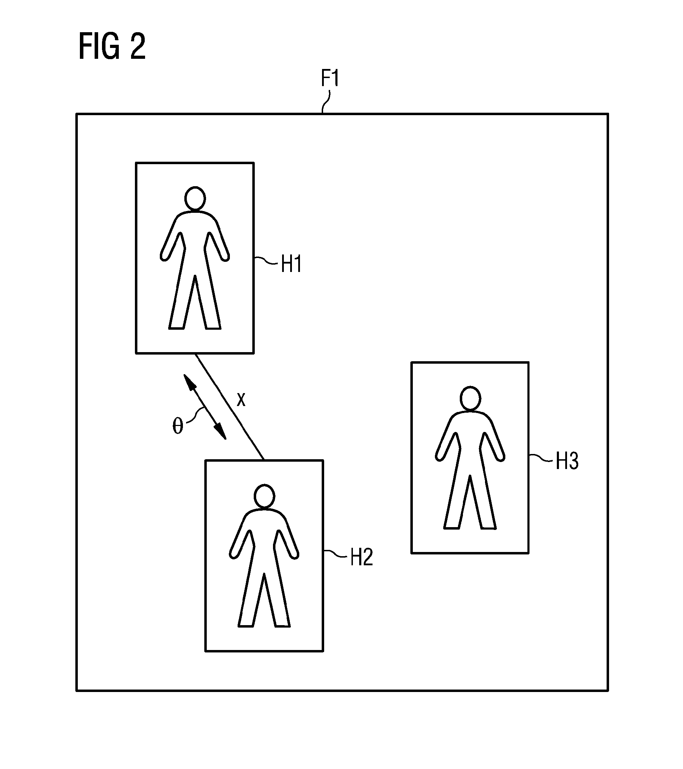

The first and second embodiment of the invention as described in the following refer to the proposition that two persons detected in a video frame are related to each other such that the two persons can see each other. An information extraction based on this proposition may be used for forensic retrieval in order to find out from a video scene whether one person could be a witness of actions (e.g. crimes) performed by another person. Fig. 2 schematically shows a video frame F1 in which a scenario of three humans H1, H2 and H3 is shown. As described in the following, it is to be determined if there is a relation between humans H1 and H2. The assessment of a relation between the persons H1 and H2 is based on the distance x between the persons for the first embodiment and on the direction of movement represented by angle $\theta$ of the persons with respect to each other for the second embodiment. Corresponding techniques in order to detect persons in a video frame as well as the distance between the persons and the direction of movement of the persons are well known and will not be described herein in detail. With respect to the direction of movement, the angle $\theta$ represents the intersection angle of the respective movement arrows of the persons. The angle $\theta$ is 0 when there does not exist an intersection point between the movement arrows. Contrary to that, an intersection angle $\theta = 180°$ corresponds to a situation where both persons move directly towards each other.

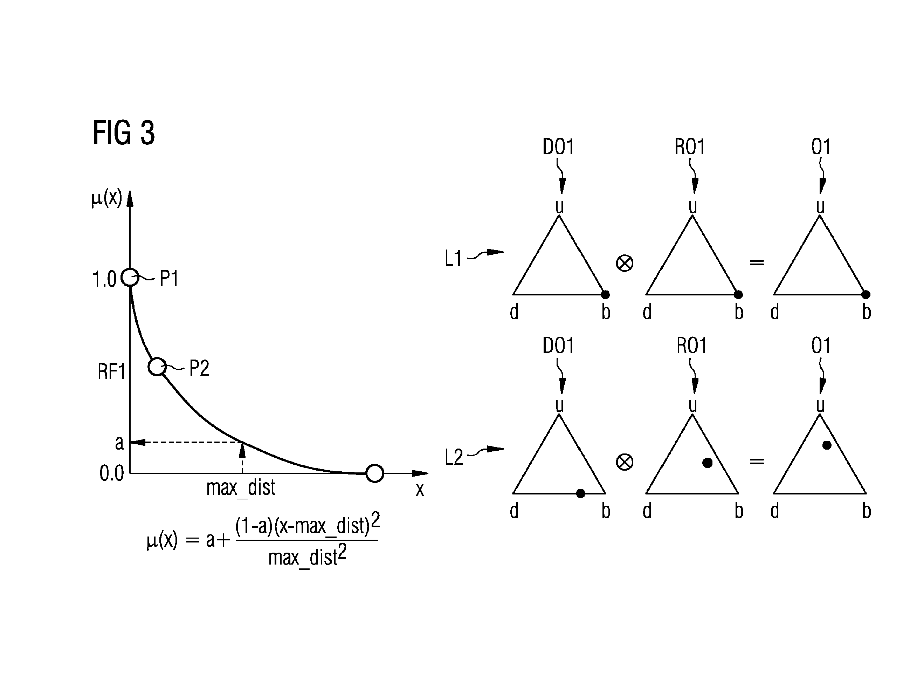

Fig. 3 shows an information extraction based on the distance x between two persons in a video frame according the first embodiment of the invention. To do so, a relation degree RF1 is introduced describing a measure for a relation between two persons based on the distance between the persons. This relation degree RF1 is modelled by a function $\mu(x)$, an example of which is shown in the left part of Fig. 3. The function is monotonically decreasing reflecting the fact that the more two people are separated from each other, the lower is the probability that those people can see each other. The function shown in Fig. 3 is just an example and other monotonically decreasing functions may be used to model the dependency between the relation degree RF1 and the distance x. Examples of other types of functions have been given in the foregoing. The function is scaled by a maximum distance max_dist being the maximum distance between two people for which two people can see each other. The probability of seeing each other for the distance max_dist is given by the value a. A subjective opinion based on the proposition that two persons are related to each other based on the distance x is derived as follows:

At first, the value of the function $\mu(\mathbf{x})$ for a given distance x between two persons in a video frame is mapped to a so-called dogmatic opinion, where a dogmatic opinion refers to a subjective opinion with an uncertainty of 0. This means, the value of $\mu(\mathbf{x})$ is indicated as a point on the edge between the vertexes d and b in an opinion triangle. This is shown in Fig. 3 in lines L1 and L2 for two different values of $\mu(\mathbf{x})$, namely $\mu(\mathbf{x}) = 1$ (point P1) in line L1 and $\mu(\mathbf{x}) = 0.7$ (point P2) in line L2. The respective dogmatic opinions are indicated as triangles DO1 in Fig. 3. Each of those dogmatic opinions is combined by the subjective logic operator "Discounting" (also named as "Reputation") with a corresponding reputation opinion RO1 describing the trustworthiness of the corresponding dogmatic opinion DO1 . The framework of subjective logic includes a plurality of operators which are well known in the art (see document [1] ) . The operator "Discounting" is such a well known operator. The reputation opinion RO1 combined with the dogmatic opinion DO1 represents the final opinion O1 .

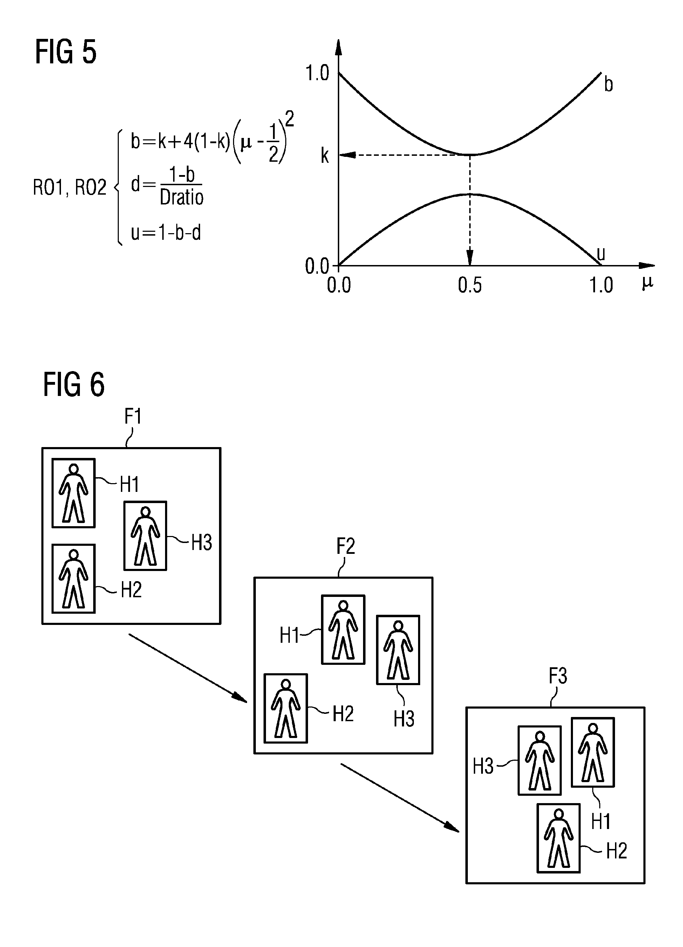

In the embodiment described herein, the reputation opinion RO1 is modelled by corresponding functions describing the belief b, the disbelief d and the uncertainty u of the reputation opinion dependent on the relation degree RF1. The corresponding function is shown in Fig. 5. In the embodiments herein, the function is the same for the above mentioned reputation opinion RO1 and for the reputation opinion R02 which is explained later on and refers to an information extraction based on the direction of movement. Fig. 5 shows in the left part the mathematical form of the function and in the right part the graphical illustration of the functions b and u. The value k of the function b represents a minimum boundary of the belief of the reputation opinion. The factor Dratio is chosen according to an estimated value representing the chances that a relation between two persons could never happen.

By using the respective values of $\mu(\mathbf{x})$ at the points P1 and P2, the reputation opinions RO1 shown in lines L1 and L2 of Fig. 3 are derived based on the functions shown in Fig. 5. As mentioned before, both opinions DO1 and RO1 in lines L1 and L2 are combined by the operator "Discounting" (also named as "Reputation") leading to corresponding opinions O1 . Those opinions represent a probability density function with respect to the proposition that two persons with a corresponding distance x from each other are related to each other. Evidently, in the case of line L1, the distance between two persons is 0 meaning that it is sure that those people have a relation. This is also evident from opinion O1 stating that there is no uncertainty in the belief that both persons have a maximum relation degree RF1 of 1.0. Contrary to that, for the opinion O1 in line L2, there is a belief of about 50% that both persons have a relation, nevertheless the uncertainty for this belief is very high.

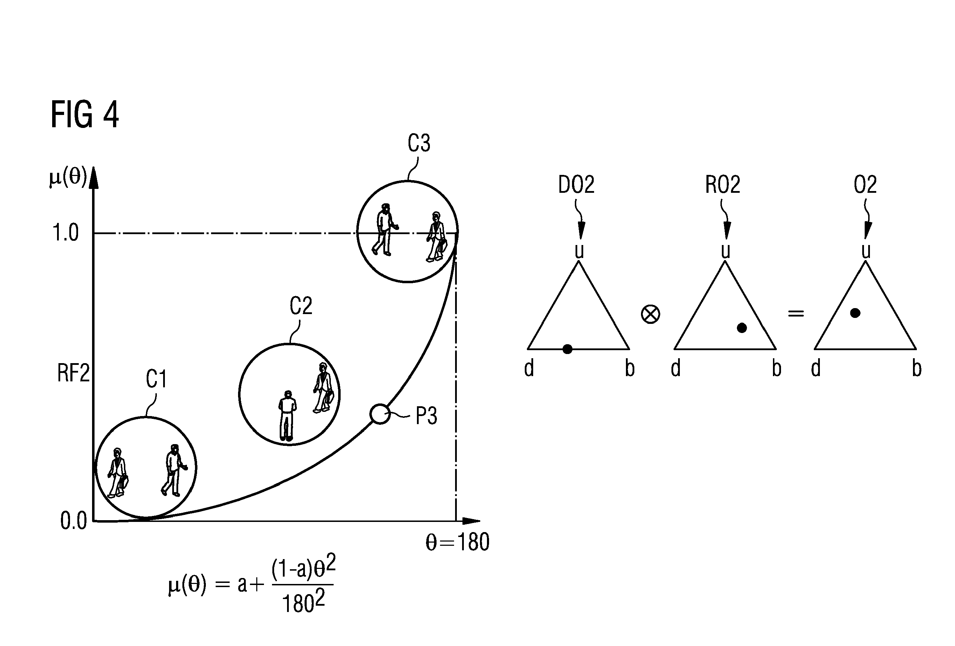

Fig. 4 shows the second embodiment of the invention where a relation between two persons is determined by the direction of movement of the persons to each other. As mentioned before, the direction of movement is represented by the angle $\theta$ . Analogously to Fig. 3, a relation degree RF2 is defined representing the dependency of the strength of a relation on the angle $\theta$ . This dependency is now modelled as a monotonically increasing function due to the fact that it can be assumed that people moving away from each other ($\theta = 0$) probably do not have a relation (e.g. do not see each other), whereas the strength of a possible relation will increase when people move more and more towards each other.

Fig. 4 shows an example of a monotonically increasing function $\mu(\theta)$ which can be used according to the invention. Other examples of such functions have been given in the foregoing. Furthermore, a circle C1 shows the scenario where people move away from each other (RF2 = 0.0), a circle C2 shows a scenario where people move in an angle of approximately 90° with respect to each other and circle C3 refers to a scenario where people move towards each other (relevance degree RF2 = 1.0). The derivation of a subjective opinion in Fig. 4 is performed analogously to Fig. 3. At first, a dogmatic opinion D02 is derived for an angle $\theta$ by indicating the function value of $\mu(\theta)$ on the edge connecting vertices d and b in the opinion triangle. This is shown in Fig. 4 for the case of point P3 on the graph of $\mu(\theta)$ , resulting in the dogmatic opinion D02. This opinion is combined by the aforementioned operator "Discounting" with the reputation opinion R02. The reputation opinion R02 is modelled by the function as shown in Fig. 5, resulting in corresponding values of u, b and d indicated in the triangle of the opinion R02 in Fig. 4. As a result of the discounting/reputation operation, an opinion 02 is derived showing that the belief that two persons are related to each other is smaller than 50% with an uncertainty in this belief by about 50%.

The philosophy of the first and the second embodiments described in the foregoing is based on the linguistic knowledge that the closer two people are and the more two people move towards each other, the higher is the chance that the people have a strong relevance. This is described by corresponding dogmatic opinions DO1 and DO2, respectively. Furthermore, a reputation in the dogmatic opinion is used based on corresponding functions, thus taking into account the trustworthiness of the dogmatic opinion together with lack of information.

The first and second embodiments of the invention can be used for filtering out meaningless pairs of human instances in crowded scenes and ranking the relevant pairs based on the extracted opinions. The extracted opinions can be used as evidential information for further processing in applications with respect to forensic retrieval. In addition to this, the first and second embodiments are also suitable for rule-based systems. This means, the given knowledge can be relatively easily encoded as a rule in rule-based systems. Although the theory of subjective logic is known per se, this logic has not yet been applied in the visual analysis/computer vision domain for extracting information out of videos or images.

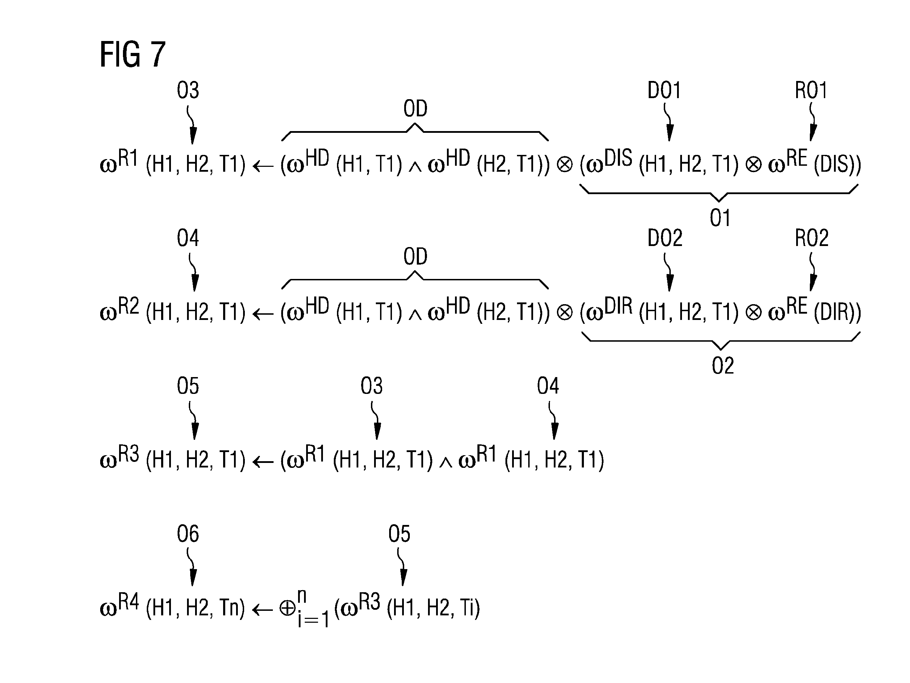

In the following, a third embodiment of the invention will be described. This embodiment combines the above explained first and second embodiments such that based on both distance and direction information an opinion on a relation between two persons in a sequence of video frames is derived. An example of such a sequence of video frames is shown in Fig. 6. This figure includes three successive video frames F1, F2 and F3 in a recorded video. In each video frame, three human persons H1 to H3 are detected but the positions of the persons change from one frame to the other. To determine for a number of frames whether there is a relation between the persons H1 and H2, the operations as shown in Fig. 7 are performed.

For each recording time Ti of each frame Fi in the sequence of frames corresponding opinions 03, 04 and 05 are determined. This is illustrated in Fig. 7 for the time T1. The dogmatic opinion DO1 with respect to the proposition that two humans H1 and H2 are related to each other due to the distance from each other is determined based on the first embodiment. This dogmatic opinion is named as $\omega^{DIS}$ (H1,H2,T1) in Fig. 7. This opinion is combined with the corresponding reputation opinion RO1 as described in the foregoing for the first embodiment by using the reputation operator. The opinion RO1 is designated as $\omega^{RE}$(DIS) in Fig. 7. The resulting opinion O1 is once again combined by the reputation operator with an opinion OD referring to the subjective opinion that humans H1 and H2 are detected in the video frame at the time T1. This opinion OD is represented by combining the opinions of agents in the form of human detectors HD. Particularly, the opinion of a human detector HD on the proposition that human H1 is detected in the frame at the time T1 is combined by the subjective logic operator "Conjunction" with the opinion of a human detector HD on the proposition that human H2 is detected in the frame at the time T1. Those opinions of the human detectors are designated as $\omega^{HD}$(H1,T1) and $\omega^{HD}$ (H2,T1).

As mentioned before, the detection process of humans in videos is well known in the prior art. Usually, the human detectors are very good so that the aforementioned opinions for the human detectors can be represented as dogmatic opinions only having binary values with the belief b = 1 in case that a human is detected and the belief b = 0 in case that a human is not detected. Both opinions O1 and OD are once again combined by the operator "Discounting", resulting in the subjective opinion 03 represented by $\omega^{R1}$(H1,H2,T1) . This opinion corresponds to a rule R1 describing the opinion on a relation between two persons H1 and H2 in a video frame at the time T1 and taking into account the detection reliability of human detectors. In the same way, an opinion 04 is derived based on the opinion OD in combination with the dogmatic opinion D02 based on the direction of movement between two persons and the corresponding reputation opinion R02. Opinions D02 and R02 are determined based on the second embodiment as shown in Fig. 4. The dogmatic opinion D02 is named as $\omega^{DIR}$ (H1,H2,T1) in Fig. 7 and the reputation opinion R02 is designated as $\omega^{RE}$(DIR). The opinion 04 is designated as $\omega^{R2}$ (H1,H2,T1) and represents the rule R2 corresponding to an opinion on a relation between humans H1 and H2 based on the direction of movement between those persons and taking into account the detection reliability of human detectors.

The derived opinions 03 and 04 are combined by the logic operator "Conjunction" to opinion 05 designated as $\omega^{R3}$(H1,H2,T1) representing a rule R3 with respect to the proposition that two persons are related to each other based on both distance information and direction information. To combine a plurality of video frames, the opinion 05 is derived for several successive video frames for time instances Ti (i = 1, ..., n). All those opinions 05 are then combined by the well-known subjective logic operator "Consensus", equally weighing each opinion and resulting in a final sixth opinion 06 designated as $\omega^{R4}$(H1,H2,Tn). This sixth opinion 06 refers to a rule R4 representing the proposition that in a sequence of video frames two detected persons H1 and H2 are related to each other. The aforementioned steps can be performed for any detected pair of human instances in a sequence of videos, thus resulting in corresponding opinions 06 for each pair. As an overall result, the opinions 06 can be output, e.g. based on a corresponding probability density function (see Fig. 1), thus giving a measure with respect to the information whether there is a relation between corresponding pairs of humans in a video scene in the sense that one person can be the witness of an action of the other person.

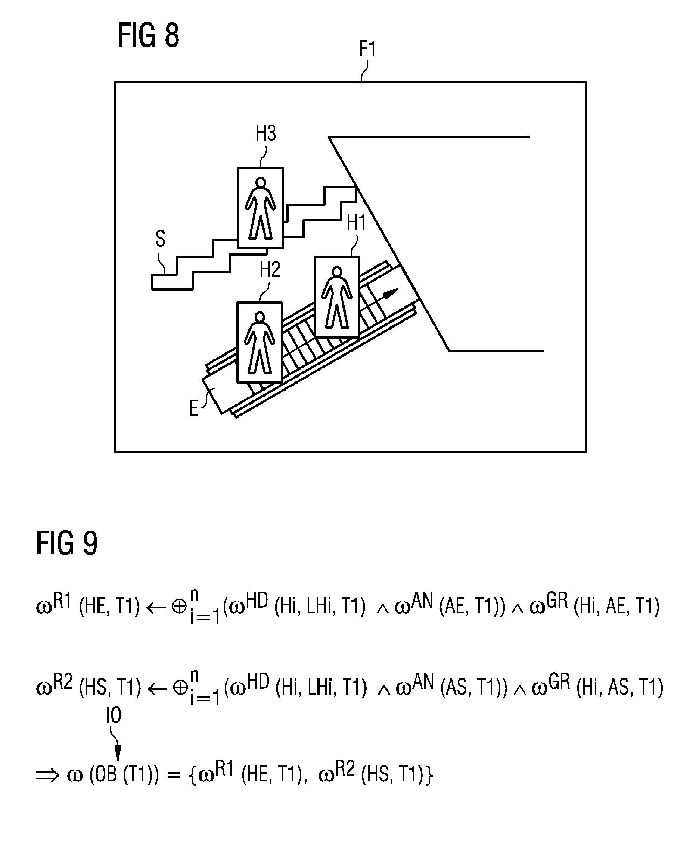

In the following, a fourth embodiment of the invention will be described being based on the abduction operation which is a well-known operation in the framework of subjective logic. According to the fourth embodiment, a video scene as shown in Fig. 8 is recorded, said scene referring to a scenario in which two floors are connected by stairs S and an escalator E where people may use the stairs S or the escalator E. Fig. 8 shows one frame F1 of the video scene. In the situation according to this frame, two detected persons H1 and H2 use the escalator E, whereas a third detected person H3 uses the stairs S. Based on well-known methods, the persons H1 to H3 can be detected in the video scene together with the position of the persons in the scene. Furthermore, the static location areas of the stairs S and the elevator E are pre-annotated in the video.

According to the fourth embodiment, it shall be derived from a video scene as shown in Fig. 8 whether the escalator E is working or not. This information shall be extracted based on reasoning with corresponding rules based on logic programming applied to the subjective logic calculus used according to the invention. To do so, an intermediate opinion IO shown in Fig. 9 is derived concerning a proposition on the observation OB at the time T1 of the frame F1, said proposition OB referring to the number of persons using the escalator and the number of persons using the stairs in the scenario at the time T1. To derive opinion IO, opinions $\omega^{R1}(HE,T1)$ and $\omega^{R2}(HS,T1)$ are calculated. Opinion $\omega^{R1}(HE,T1)$ refers to the rule R1 concerning the observation that the detected persons at the time T1 in the video are on the escalator (HE = human on escalator) .

To derive opinion $\omega^{R1}(HE,T1)$, for each person Hi at the corresponding location LHi at the time T1, the opinion $\omega^{R1}(Hi,LHi,T1)$ concerning the proposition that human Hi is detected at the location LHi is combined by the subjective logic operator "Conjunction" with the annotation opinion $\omega^{AN}(AE,T1)$ referring to the opinion concerning the proposition that the escalator E is in the annotated area AE. This combined opinion is once again combined with a so-called geometry agent GR representing the opinion $\omega^{GR}(Hi,AE,T1)$ concerning the proposition that the center point of the corresponding human Hi is inside the area of the escalator E. Usually, the geometry agent is represented by a dogmatic opinion with binary value b = 1 for the case that the center point is inside the escalator and with the binary value b = 0 for the case that the center point is outside of the area of the escalator. Analogously, the other opinions $\omega^{HD}(Hi,LHi,T1)$ and $\omega^{AN}(AE,T1)$ may also be represented by binary dogmatic opinions as it can be assumed that the annotation of the escalator in the video frame as well as the detection of a human in the video frame at a predetermined location are usually very reliable. The aforementioned operations are performed for each human Hi (I = 1, ..., n) in the corresponding video frame and the results for each human are combined by the consensus operator, resulting in the aforementioned opinion $\omega^{R1}(HE,T1)$

The above operations are analogously performed for the stairs shown in Fig. 8, i.e. for an annotated area AS of the stairs represented by the opinion $\omega^{AN}(AS,T1)$ As explained before for the escalator, an opinion $\omega^{HD}(Hi,LHi,T1)$ for the detection of human Hi at the location LHi is combined by the conjunction operation with the opinion $\omega^{AN}(AS,T1)$ referring to the pre-annotated area of the stairs, said combined opinion once again being combined with the corresponding geometry agent based on the opinion $\omega^{GR}(Hi,AS,T1)$ said geometry agent referring to the proposition that a center point of a human Hi is inside the area AS of the stairs. The opinions with respect to the stairs are also preferably represented by binary dogmatic opinions. All opinions for the humans Hi in the video are eventually combined by the consensus operator to opinion $\omega^{R2}(H2,T1)$.

After the derivation of the opinions $\omega^{R1}(HE,T1)$ for the escalator and $\omega^{R2}(HS,T1)$ for the stairs, the intermediate opinion IO is formed by the combination of those opinions. This opinion is named $\omega(OB(T1))$ in Fig. 9 and concerns the opinion on the proposition that a number of persons use the escalator and a number of persons use the stairs according to the observation detected at the time T1 in the frame F1.

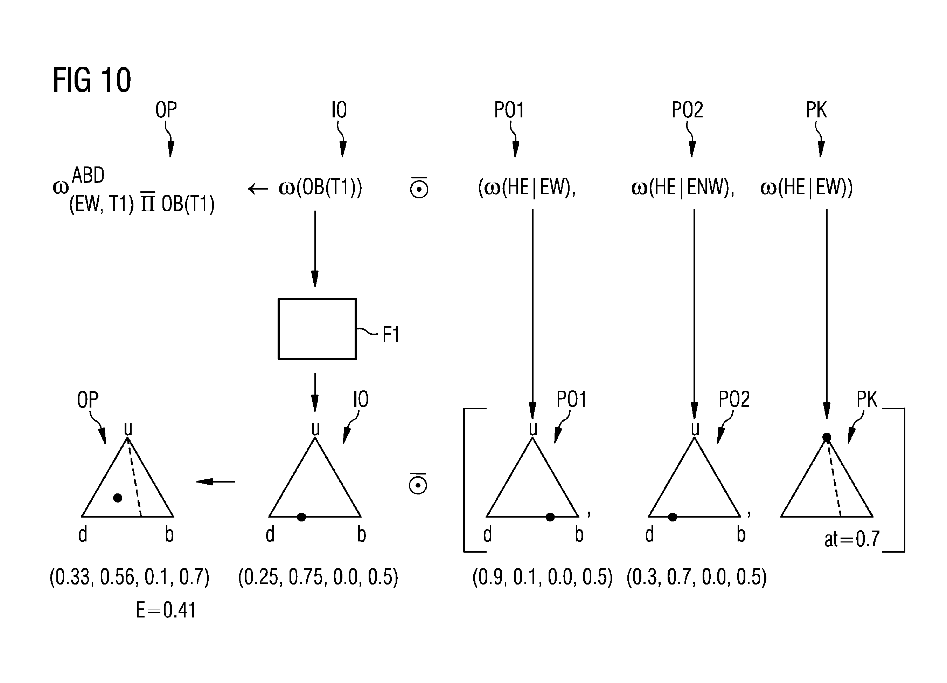

Fig. 10 shows the overall process for determining a subjective opinion based on the subjective logic operator "Abduction" by using the intermediate opinion IO derived in Fig. 9. Fig. 10 refers to a concrete example where the intermediate opinion IO is derived from a frame F1 not shown in detail but corresponding to a scenario analogously to Fig. 8. Based on the method as described with respect to Fig. 9, it is derived from the video frame that one person is located on the escalator and three persons are located on stairs. This observation corresponds to the intermediate opinion IO indicated as a quadruple and triangle in Fig. 10. Due to the observation, the probability that a person is on the escalator is 0.25 whereas the probability that a persons is on the stairs is 0.75 because three out of four persons are located on stairs and not on the escalator. The uncertainty of the opinion IO is set to 0 and the atomicity for the opinion IO is set to the default value 0.5. The intermediate opinion IO is combined by the abduction operator with a first predetermined opinion PO1 a second predetermined opinion P02 as well as a predetermined prior knowledge value. The first predetermined opinion is designated as $\omega(HE|EW)$ and refers to the opinion on the proposition that persons are on the escalator (HE = humans on the escalator) in case that the escalator is working (EW = escalator is working). The second predetermined opinion P02 designated as $\omega(HE|ENW)$ refers to the opinion on the proposition that persons are on the escalator in case that the escalator is not working (ENW = escalator is not working). The prior knowledge value PK designated as $\omega(EW)$ is represented by a probability value in the form of an atomicity at and reflects the tendency, i.e. the long-term probability that the escalator is working. The above predetermined opinions PO1, PO2 and the prior knowledge value PK are estimated from prior observations and are used as an input in the process for performing abduction.

In the example of Fig. 10, the first predetermined opinion PO1 is represented as a dogmatic opinion with a belief of 0.9, a disbelief of 0.1, an uncertainty of 0 and an atomicity of 0.5. The second predetermined opinion P02 is represented by a belief of 0.3, a disbelief of 0.7, an uncertainty of 0 and an atomicity of 0.5. The prior knowledge PK is represented by a probability value of 0.7. Based on the well-known abduction operator, the intermediate opinion IO concerning the detected observation is combined with the assumed prior opinions PO1 PO2 and PK, resulting in an opinion OP on the proposition that the escalator is working for the observation OB detected in the frame F1 at the time T1. In the example of Fig. 10, the opinion OP is designated as $\omega^{\text{ABD}}_{(\text{EW},\text{T1}\overline{\text{II}}\,\text{OB}(\text{T1}))}$ and has a belief of 0.33, a disbelief of 0.56, an uncertainty of 0.1, an atomicity of 0.7 and a probability expectation value E of 0.41. Evidently, this corresponds to the opinion that the escalator seems to be not working. Based on the embodiment of Fig. 10, a video surveillance system for monitoring the proper functioning of an escalator may be deployed. This system analyses the incoming video frames and determines in real time the opinion OP. Preferably, this opinion is shown on a monitor and gives the user a feedback about the belief that the escalator is working. Preferably, the opinion is shown as a corresponding probability density function. In case that this function strongly indicates that there is a high belief that the escalator is not working (because most of the people use the stairs) combined with a low uncertainty in this belief, the user can take appropriate measures to check the functioning of the escalator and initiate a maintenance of the escalator.

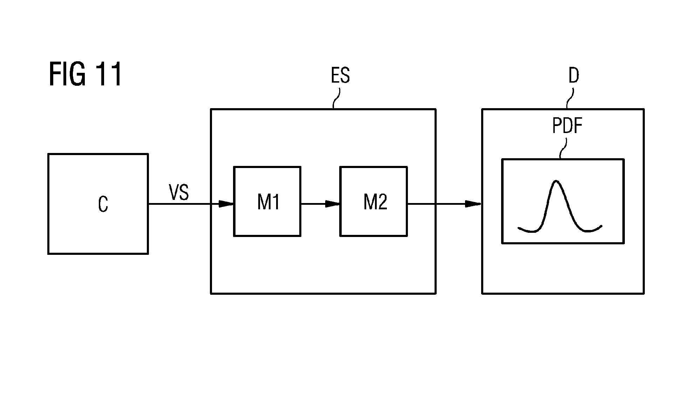

Fig. 11 is a schematic view on the main components of a system for extracting information from a video based on an embodiment of the invention. The system is designated as ES (ES = extraction system) and comprises first means M1 and second means M2 which can be realized as corresponding software and/or hardware components in a computer. The extraction system ES receives a video stream VS recorded by a camera C. The first means M1 detects persons in the video stream and parameter of said persons in the video stream. This detected information is processed by the second means M2 which derives at least one opinion referring to a proposition concerning information in the video from the parameters of the detected objects. Thereafter, the opinion or opinions calculated by the second means M2 are output to an output means in the form of a display D. In the embodiment of Fig. 11, an opinion is shown as a graph including the probability density function PDF of the opinion.

References

[1] A. Josang: "Conditional reasoning with subjective logic", Journal of multiple valued logic and soft computing, 2008.

[2] A. Josang: "A logic for uncertain probabilities", International Journal of Uncertainty, Fuzziness and Knowledge-Based Systems, No. 7, pp. 279-311, 2001.

**Claims**

1. A method for computer-assisted extraction of information from a digital video comprising one or more image frames (F1, F2, F3), including the steps of:

   i) detecting a number of objects (H1, H2, H3) and one or more parameters $(x, \theta)$ with respect to said number of objects (H1, H2, H3) in the video;
   ii) determining one or more opinions (O1 02, ..., 06, OP) based on subjective logic, each opinion (O1 02, ..., 06, OP) referring to a proposition concerning information in the video and being derived from said one or more parameters with respect to said number of objects (H1, H2, H3) in the video.

2. The method according to claim 1, wherein said one or more opinions (O1 02, ..., 06, OP) are output as corresponding probability density functions (PDF).

3. The method according to claim 1 or 2, wherein said one or more opinions (O1 02, ..., 06, OP) refer to a relation proposition that two objects (H1, H2), particularly two persons, in the video have a relation, particularly that two persons in the video can see each other.

4. The method according to claim 3, wherein the relation proposition is based on the following parameters with respect to two objects (H1, H2):

   - the distance $(x)$ between the two objects (H1, H2) in the video; and/or
   - the direction $(\theta)$ of movement of the two objects (H1, H2) with respect to each other in the video.

5. The method according to claims 3 and 4, wherein step ii) comprises the following sub-steps:

   - determining a first relation degree (RF1) between the two objects (H1, H2), where the first relation degree (RF1) represents a strength of the relation between the two objects (H1, H2) based on the distance $(x)$ between the two objects (H1, H2), and/or determining a second relation degree (RF2) between the two objects (H1, H2), where the second relation degree (RF2) represents a strength of the relation between the two objects (H1, H2) based on the direction $(\theta)$ of movement of the two objects (H1, H2) with respect to each other;
   - determining a first relation opinion (DO1) for the first relation degree (RF1), where the first relation opinion (DO1) is preferably a first dogmatic opinion, where the uncertainty $(u)$ of the first dogmatic opinion (DO1) is zero, and where the belief of the first relation opinion (DO1) represents the first relation degree (RF1), and/or determining a second relation opinion (DO2) for the second relation degree (RF2), where the second relation opinion is preferably a second dogmatic opinion, where the uncertainty (u) of the second dogmatic opinion (DO2) is zero, and where the belief of the second relation opinion (DO2) represents the second relation degree (RF2);

- determining a first reputation opinion (RO1) for the first relation degree (RF1), where the first reputation opinion (RO1) models a belief in the correctness of the first relation degree (RF1), and/or determining a second reputation opinion (RO2) for the second relation degree (RF2), where the second reputation opinion (RO2) models a belief in the correctness of the second relation degree (RF2);

- combining the first relation opinion (DO1) and the first reputation opinion (RO1) by the subjective logic operator "Discounting", thus forming a first opinion (O1), and/or combining the second relation opinion (DO2) and the second reputation opinion (RO2) by the subjective logic operator "Discounting", thus forming a second opinion (O2).

6. The method according to claim 5, wherein the first relation degree (RF1) decreases with increasing distance (x) between the two objects (H1, H2) and/or where the second relation degree (RF2) increases the more the two objects (H1, H2) move towards each other according to the direction ($\theta$) of movement of the two objects (H1, H2) with respect to each other.

7. The method according to claim 6, wherein the first relation degree (RF1) is modelled by a monotonically decreasing function ($\mu(x)$) dependent on the distance (x) between the two objects (H1, H2) and/or the second relation degree (RF2) is modelled by a monotonically increasing function ($\mu(\theta)$) dependent on the direction ($\theta$) of movement of the two objects (H1, H2) with respect to each other.

8. The method according to claim 7, wherein the first relation degree is modelled by one of the following functions $\mu 1$ (x) or $\mu 2$ (x) or $\mu 3$ (x) :

$$\mu 1(x) = a + \frac{(1-a)\left(\max\_ dist^2 - x^2\right)}{\max\_ dist^2}$$

$$\mu 2(x) = a + \frac{(1-a)\left(x - \max\_ dist\right)^2}{\max\_ dist^2}$$

$$\mu 3(x) = a + \frac{(1-a)\left(x - \max\_ dist\right)}{\max\_ dist}$$

where max_dist is an estimated maximum distance for which two objects (H1, H2) can have a relation with each other;
where a is the probability of a relation at the maximum distance max_dist;
where x is the distance between the two objects (H1, H2).

9. The method according to claim 7 or 8, wherein the second relation degree (RF2) is modelled by one of the following functions $\mu 1$ ($\theta$) or $\mu 2$ ($\theta$) or $\mu 3$ ($\theta$):

$$\mu 1(\theta) = 1 + \frac{(a-1)\left(180^2 - \theta^2\right)}{180^2}$$

$$\mu 2(\theta) = a + \frac{(1-a)\theta}{180}$$

$$\mu 3(\theta) = a + \frac{(1-a)\theta^2}{180^2}$$

where $\theta$ is the intersection angle between the moving directions of the two objects (H1, H2);
where a is the probability of a relation between the two objects (H1, H2) at an intersection angle $\theta = 0$.

10. The method according to one of claims 5 to 9, wherein the first reputation opinion (RO1) and/or the second reputation opinion (RO2) are each generated by a belief function (b), a disbelief function (d) and an uncertainty function (u), the belief function (b) describing the belief of the corresponding first or second reputation opinion (RO1, RO2) dependent on the corresponding first or second relation degree (RF1, RF2) and the uncertainty function (u) describing the uncertainty of the corresponding first or second reputation opinion (RO1, RO2) dependent on the corresponding first or second relation degree (RO1, RO2) and the disbelief function (d) being one minus the belief function and minus the uncertainty function (u).

11. The method according to claim 10, wherein the belief function (b) has a value of one for a value of zero of the corresponding first or second relation degree (RF1, RF2) and wherein the belief function (b) has values smaller than one but greater than zero for values of the corresponding first or second relation degree (RF1, RF2) between zero and a maximum value of the corresponding first or second relation degree (RF1, RF2) and wherein the belief function (b) has a value of one for the maximum value of the corresponding first or second relation degree (RF1, RF2).

12. The method according to claim 10 or 11, wherein the uncertainty function (u) has a value of zero for a value of zero of the corresponding first or second relation degree (RF1, RF2) and wherein the uncertainty function (u) has values greater than zero but smaller than one for values of the corresponding first or second relation degree between zero and a maximum value of the first or second relation degree (RF1, RF2) and wherein the uncertainty function (u) has a value of zero for the maximum value of the corresponding first or second relation degree (RF1, RF2).

13. The method according to claim 11 and 12, wherein the belief function b, the disbelief function d and the uncertainty function u are defined as follows:

$$b = k + 4(1-k)\left(\mu - \frac{1}{2}\right)^2$$

$$d = \frac{1-b}{Dratio}$$

$$u = 1 - b - d$$

where k is the minimum value of the belief;
where $\mu$ is the relation degree;
where Dratio is a predetermined constant, particularly Dratio = 2.

14. The method according to one of claims 5 to 13, wherein the video comprises a number of frames (F1, F2, F3), and steps i) and ii) are performed for each frame (F1, F2, F3) of at least a part of the frames from the video, where for each frame:

- the first opinion (O1) is combined by the subjective logic operator "Discounting" with an opinion (OD) on the detection of the two objects (H1, H2), resulting in a third opinion (O3);
- the second opinion (O2) is combined by the subjective logic operator "Discounting" with an opinion on the detection of the two objects (H1, H2), resulting in a fourth opinion (O4);
- the third opinion (O3) and the fourth opinion (O4) are combined by the subjective logic operator "Conjunction" to a fifth opinion (O5).

15. The method according to claim 14, wherein the opinion (OD) on the detection of the two objects (H1, H2) is calculated by combining an opinion on the detection of each object by the subjective logic operator "Conjunction".

16. The method according to claim 14 or 15, wherein the fifth opinions (O5) of each frame (F1, F2, F3) are combined by the subjective logic operators "Consensus" to a sixth opinion (O6).

17. The method according to one of the preceding claims, wherein in step ii)

- one or more intermediate opinions (IO) on a proposition concerning one or more detected observations are determined, said detected observations being derived from said one or more parameters with respect to said number of objects (H1, H2, H3) detected in step i);
- a first predetermined opinion (PO1) on a proposition concerning a first predetermined observation in case that a condition applies and a second predetermined opinion (PO2) on a proposition concerning a second predetermined observation in case that said condition does not apply as well as a predetermined prior knowledge value (PK) are combined by the subjective logic operator "Abduction" with said one or more intermediate opinions (IO), thus resulting in an opinion (OP) on a proposition concerning the presence of said condition based on said one or more detected observations.

18. The method according to claim 17, wherein said one or more intermediate opinions (IO) as well as the first and second predetermined opinions (PO1, P02) are dogmatic opinions and wherein the prior knowledge value (PK) is a probability value representing an estimated probability that said condition applies.

**19.** The method according to claim 17 or 18, wherein said one or more parameters with respect to said number of objects (H1, H2, H3) refer to the respective positions of the number of objects (H1, H2, H3) in the video, where each object (H1, H2, H3) of the number of objects (H1, H2, H3) preferably represents a person.

**20.** The method according to claim 19, wherein said one or more intermediate opinions (IO) comprise one or more opinions on propositions that objects (H1, H2, H3) detected in the video are located in one or more predetermined areas (E, S).

**21.** The method according to claim 20, wherein said one or more predetermined areas comprise an area of a transportation means, particularly of an escalator (E).

**22.** The method according to claim 21, wherein the first predetermined opinion (PO1) refers to the proposition that objects (H1, H2, H3) are on the transportation means in case that the transportation means is working and wherein the second predetermined opinion (PO2) refers to the proposition that objects (H1, H2, H3) are not on the transportation means or are on another transportation means in case that the transportation means is not working and wherein the prior knowledge value refers to a probability that the transportation means is working, thus resulting in an opinion (OP) on the proposition that the transportation means is working for the detected observation.

**23.** A video analyzing system for computer-assisted extraction of information from a digital video comprising one or more image frames (F1, F2, F3), including:

- first means (M1) for detecting a number of objects (H1, H2, H3) and one or more parameters $(x, \theta)$ with respect to said number of objects (H1, H2, H3) in the video;
- second means for determining one or more opinions (O1, 02, ..., 06, OP) based on subjective logic, each opinion (O1, O2, ..., O6, OP) referring to a proposition concerning information in the video and being derived from said one or more parameters with respect to said number of objects (H1, H2, H3) in the video.

**24.** The system according to claim 23, comprising means for performing a method according to one of claims 2 to 22.

**25.** A computer program product directly loadable into the internal memory of a digital computer, comprising software code portions for performing the method according to one of claims 1 to 22 when said product is run on a computer.

FIG 1

$$\omega_X^A = \; <b, d, u, a> \; = Beta \; (\alpha, \beta)$$

$\alpha = 6.88 \quad \beta = 2.68$

FIG 2

FIG 3

$$\mu(x) = a + \frac{(1-a)(x-max\_dist)^2}{max\_dist^2}$$

EP 2 333 736 A2

# FIG 4

$$\mu(\theta) = a + \frac{(1-a)\theta^2}{180^2}$$

FIG 5

$$RO1, RO2 \begin{cases} b = k + 4(1-k)\left(\mu - \dfrac{1}{2}\right)^2 \\ d = \dfrac{1-b}{Dratio} \\ u = 1-b-d \end{cases}$$

FIG 6

# FIG 7

$$\omega^{R1} (H1, H2, T1) \leftarrow (\omega^{HD} (H1, T1) \wedge \omega^{HD} (H2, T1)) \otimes (\omega^{DIS} (H1, H2, T1) \otimes \omega^{RE} (DIS))$$

O3 → $\omega^{R1}$; OD; DO1, RO1; O1

$$\omega^{R2} (H1, H2, T1) \leftarrow (\omega^{HD} (H1, T1) \wedge \omega^{HD} (H2, T1)) \otimes (\omega^{DIR} (H1, H2, T1) \otimes \omega^{RE} (DIR))$$

O4 → $\omega^{R2}$; OD; DO2, RO2; O2

$$\omega^{R3} (H1, H2, T1) \leftarrow (\omega^{R1} (H1, H2, T1) \wedge \omega^{R1} (H1, H2, T1)$$

O5 → $\omega^{R3}$; O3; O4

$$\omega^{R4} (H1, H2, Tn) \leftarrow \oplus_{i=1}^{n} (\omega^{R3} (H1, H2, Ti)$$

O6 → $\omega^{R4}$; O5

EP 2 333 736 A2

# FIG 8

# FIG 9

$$\omega^{R1} (HE, T1) \leftarrow \bigoplus_{i=1}^{n} (\omega^{HD} (Hi, LHi, T1) \wedge \omega^{AN} (AE, T1)) \wedge \omega^{GR} (Hi, AE, T1)$$

$$\omega^{R2} (HS, T1) \leftarrow \bigoplus_{i=1}^{n} (\omega^{HD} (Hi, LHi, T1) \wedge \omega^{AN} (AS, T1)) \wedge \omega^{GR} (Hi, AS, T1)$$

IO

$$\Rightarrow \omega (OB (T1)) = \{\omega^{R1} (HE, T1), \ \omega^{R2} (HS, T1)\}$$

# FIG 10

$$\omega^{ABD}_{(EW,\,T1)} \overline{\Pi}\ OB(T1) \quad \leftarrow \quad \omega(OB(T1)) \quad \overline{\odot} \quad (\omega(HE\,|\,EW),\quad \omega(HE\,|\,ENW),\quad \omega(HE\,|\,EW))$$

OP · IO · PO1 · PO2 · PK

OP · IO · PO1 · PO2 · PK · F1

(0.33, 0.56, 0.1, 0.7)  (0.25, 0.75, 0.0, 0.5)  (0.9, 0.1, 0.0, 0.5)  (0.3, 0.7, 0.0, 0.5)

E=0.41

at=0.7

EP 2 333 736 A2

FIG 11

ES

D

PDF

C

VS

M1

M2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. JOSANG.** A logic for uncertain probabilities. *International Journal of Uncertainty, Fuzziness and Knowledge-Based Systems,* 2001, 279-311